# EUROPEAN PATENT SPECIFICATION

(11) **EP 2 105 460 B1**
(45) Date of publication and mention of the grant of the patent: **12.10.2016**
(21) Application number: 07851068.2
(22) Date of filing: 21.12.2007
(51) Int. Cl.: F16G 1/06, F16G 1/28, F16G 5/04, F16G 5/20, C08K 3/04, C08K 3/22, C08K 5/09

(54) **RUBBER COMPOSITION FOR TRANSMISSION BELT AND TRANSMISSION BELT**
KAUTSCHUKZUSAMMENSETZUNG FÜR TREIBRIEMEN UND TREIBRIEMEN
COMPOSITION DE CAOUTCHOUC POUR UNE COURROIE DE TRANSMISSION ET COURROIE DE TRANSMISSION

(30) Priority: 22.12.2006 JP 2006346484
(43) Date of publication of application: 30.09.2009
(73) Proprietor: Bando Chemical Industries Ltd., Kobe-shi Hyogo 652-0882 (JP)
(72) Inventor: MATSUDA, Hisashi, Kobe-shi Hyogo 652-0882 (JP)
(74) Representative: Weickmann & Weickmann PartmbB
(86) International application number: PCT/JP2007/074716
(87) International publication number: WO 2008/078700

(56) References cited:
- EP-A2- 0 048 678
- WO-A1-2007/018148
- JP-A- 56 032 530
- JP-A- 57 089 949
- JP-A- 57 197 155
- JP-A- 2006 153 059
- JP-A- 2006 183 805
- JP-A- 2006 234 089
- JP-A- 2007 232 205
- US-A- 4 569 382
- US-A- 4 823 942
- US-A- 5 391 627
- US-A1- 2002 187 869
- US-A1- 2003 211 912

## Description

### TECHNICAL FIELD

The present invention relates to a rubber composition for a transmission belt and a transmission belt.

### BACKGROUND ART

Conventionally, a transmission belt such as a V-belt or a V-ribbed belt has been widely used, for example, as a transmission belt for driving an auxiliary machine to be use when operating automobiles. The transmission belt for driving an auxiliary machine may occasionally have a negative impact on electronics devices due to static electricity generated between the belt and a pulley
or cause electric shocks due to short circuit.

For the aforementioned reasons, there has recently been a demand for reduction of the electrical resistance of the transmission belt for driving an auxiliary machine. Specifically, a transmission belt for driving an auxiliary machine which has properties such as an electrical resistance of not more than 50MΩ when measured by applying a voltage of 500 V with a distance of 100 mm has been demanded. The demanded properties include maintenance of electrical resistance of the belt after installed in an engine and driven for a certain distance. Accordingly, various kinds of technologies to impart electrical conductivity to a transmission belt have been developed.

Patent Document 1 discloses a transmission belt which is formed of a rubber or a rubber-like plastic and embedded with a fiber or metallic reinforcing member, and further has its surface coated with an electrically conductive coating that contains an electrically conductive carbon black. Patent Document 2 discloses a V-ribbed belt which is coated with an outer-cover canvas rubber complex including a backside rubber layer made of a rubber complex containing a CR polymer, a hard carbon, an electrically conductive carbon, zinc oxide and stearic acid. Patent Document 3 discloses a transmission belt in which a canvas for a transmission belt having carbon fibers mixed or mix-spinned therein is bonded on a surface of the belt body.

Patent Document 4 discloses a V-ribbed belt having: an adhesive rubber embedded with a core wire along the longitudinal direction; a compression rubber layer including a ribbed portion along the longitudinal direction; and a canvas on the backside of the belt. A canvas layer positioned on the backside is allowed to have an electrical conductivity by dispersing an electrically conductive material such as an electrically conductive carbon black, a ketjen black, a metal powder or a carbon fiber in a rubber. Further, the compression rubber layer is electrically insulated by addition of zinc oxide and stearic acid.

Patent Document 5 discloses a V-rubbed belt which contains a rubber, a carbon black having a given nitrogen adsorption specific surface area and a given DBP oil absorption, and a rubber composition containing zinc oxide and stearic acid. The V-ribbed belt is imparted with abrasion resistance, durability and noise reduction property.

However, although the transmission belt with the foregoing structure can be imparted with electrical conductivity when it is new, the electrical conductivity is lost after the transmission belt is mounted on an engine and driven. Therefore, problematically, the transmission belt after driving has insufficient ability to maintain electrical conductivity. Further, it is desired that the bottom rubber layer (compression rubber layer) face be imparted with electrical conductivity as well. Moreover, a rubber compounding technology for providing a belt which causes little increase in the electrical resistance at the time of driving and has necessary properties such as abrasion resistance has not been sufficiently studied. Furthermore, the nitrogen adsorption specific surface area or the DBP oil absorption of furnace carbon black has not been sufficiently examined.

Patent Document 1: JP 60-222635 A
Patent Document 2: JP 6-323368 A
Patent Document 3: JP 10-38033 A
Patent Document 4: JP 10-184812 A
Patent Document 5: JP 2006-183805 A

In a further document, US 5,391,627, a rubber composition is disclosed which comprises an ethylenically unsaturated nitrile-conjugated diene copolymer according to the generic term of the present invention. However, this document is not concerned with and does not mention the electrical conductivity of a transmission belt made from said rubber composition and further it is not concerned with and does not mention the maintenance of the electrical conductivity over a long duration use thereof.

US 4,823,942 also relates to an electrically conductive document transport belt, however, this document of the prior art does not disclose a nitrogen absorption specific surface area and a DBP oil absorption according to the present invention.

EP 0 048 678 while relating, inter alia, to rubber industrial power transmission belts and conveyor belts made from a certain sulfur-vulcanized rubber composition and reinforced by means of metallic cord wires also does not disclose the present invention, especially specific DBP oil absorption, nitrogen absorption, specific surface area or a specific type of useable carbon black.

### DISCLOSURE OF INVENTION

### PLOBLEMS TO BE SOLVED BY THE INVENTION

In light of the foregoing status, the present invention aims to provide a rubber composition for a transmission belt which makes it possible to produce a transmission belt having an excellent electrical conductivity, having an excellent ability to maintain an electrical conductivity even after driving, and having excellent flex fatigue resistance and abrasion resistance.

### MEANS FOR SOLVING THE PROBLEMS

The present invention is a rubber composition for a transmission belt, which is characterized by containing a rubber, a furnace carbon black, zinc oxide, and stearic acid, wherein the furnace carbon black has a nitrogen adsorption specific surface area of not less than 75 m²/g and a DBP oil absorption of not less than 100 cm³/100 g, the furnace carbon black content is 50 to 100 parts by mass relative to 100 parts by mass of the rubber, the zinc oxide content is not less than 6 parts by mass relative to 100 parts by mass of the rubber, and the stearic acid content is not less than 1 part by mass relative to 100 parts by mass of the rubber.

The rubber is an ethylene-α-olefin elastomer.

Another aspect of the present invention is a transmission belt which contains the foregoing rubber composition for a transmission belt.

Another aspect of the present invention is a transmission belt which is obtainable by using a vulcanized rubber produced from a rubber composition for a transmission belt, wherein an electrical resistance of the transmission belt in a form of a 6-rib PK V-ribbed belt is not more than 1 MΩ; the vulcanized rubber, which constitutes the transmission belt, contains 25 to 40% by mass of a carbon black as measured under a condition in accordance with the method A of JIS K6227; and the rubber composition contains a rubber, zinc oxide in an amount of not less than 6 parts by mass relative to 100 parts by mass of the rubber, and stearic acid in an amount of not less than 1 part by mass relative to 100 parts by mass of the rubber.

The following description will discuss the present invention in more details.

The rubber composition for a transmitting belt according to the present invention is a rubber composition to be used for producing a transmission belt which contains a rubber, a carbon black having a given nitrogen adsorption specific surface area and a given DBP oil absorption, zinc oxide, and stearic acid in a specific blending ratio. By using the rubber composition for a transmission belt, it is possible to produce a transmission belt having an excellent electrical conductivity, an excellent ability to maintain an electrical conductivity even after driving, and excellent flex fatigue resistance and abrasion resistance.

As a method to impart electrical conductivity to a belt, use of an electrically conductive carbon represented by ketjen black has been known. However, use of the electrically conductive carbon costs high, and further causes variations in the electrical conductivity during processing. Therefore, it is problematically not possible to appropriately impart to the belt a desired electrical conductivity or ability to maintain the electrical conductivity even after driving. Moreover, in order to design a rubber with a practical elasticity ratio for a transmission belt, since ketjan black has high reinforcing ability, the amount of ketjan black to be added is small. As a result, a volume ratio of the rubber is increased, which may problematically lead to generation of an abnormal noise.

On the other hand, when furnace carbon black is used to impart electrical conductivity, although the cost can be reduced, it is extremely difficult to suppress the increase in the electrical resistance during driving of belt and simultaneously to achieve excellent flex fatigue resistance and abrasion resistance.

According to the present invention, the rubber is blended with a furnace carbon black having a given nitrogen adsorption specific surface area and a given DBP oil absorption, and is further blended with zinc oxide and stearic acid. Those components are blended in a specific ratio. When such an unvulcanized rubber composition is used for production of a belt, it is possible to impart a desired electrical conductivity to the transmission belt, and further it is possible to prevent the electrical resistance from increasing due to driving the belt. Moreover, variations in the electrical conductivity caused during the processing can be reduced as compared with the case of using an electrically conductive carbon. Furthermore, excellent flex fatigue resistance and abrasion resistance can be achieved. By vulcanizing the unvulcanized rubber composition of the present invention, it is possible to produce a transmission belt which has excellent properties including all of the above: electrical conductivity, ability to maintain electrical conductivity even after driving, flex fatigue resistance, and abrasion resistance. Accordingly, the present invention can solve the problems that have not been solved by conventional technologies.

The nitrogen adsorption specific surface area of the furnace carbon black is not less than 75 m²/g. When the nitrogen adsorption specific surface area is less than 75 m²/g, a large amount of the furnace carbon black is necessary to obtain a desired electrical conductivity. In this case, the hardness or the elasticity of the rubber excessively increases to deteriorate the flex fatigue resistance. The nitrogen adsorption specific surface area is preferably 75 to 250 m²/g and is more preferably 75 to 150 m²/g.

The nitrogen adsorption specific area (N₂SA) is a value measured according to the method B of ASTM D7037-38 "Standard Test Method for Carbon Black-Surface Area by Nitrogen Absorption".

The DBP oil absorption of the furnace carbon black is not less than 100 cm³/100 g. The DBP oil absorption of less than 100 cm³/100 g may not provide a transmission belt having excellent electrical conductivity, ability to maintain electrical conductivity even after driving, flex fatigue resistance, and abrasion resistance. The DBP oil absorption is preferably 100 to 300 cm³/100 g and is more preferably 100 to 190 cm³/100 g.

The DBP oil absorption used herein refers to an amount of DBP (dibutyl phthalate) absorbed per 100 g of carbon black when measured in accordance with JIS K6217. The DBP oil absorption value has a positive correlation with the porosity of the carbon black, and thus indirectly determines the specific surface area of the carbon black.

the average primary particle size of the furnace carbon black is preferably 10 to 50 nm. When the furnace carbon black has an average primary particle size within the aforementioned range, the effect of the present invention can be efficiently achieved.

The furnace carbon black is not particularly limited as long as it is a filler which can be obtained by incomplete combustion of a hydrocarbon oil or a natural gas and has the foregoing given nitrogen adsorption specific surface area and DBP oil absorption. Examples of the furnace carbon black include SAF, ISAF, IISAF, HAF, FF, FEF, MAF, GPF, SRF, and CF, depending on the particle size. Preferable among them are SAF, ISAF, and HAF and more preferable among them is ISAF because use thereof makes it possible to obtain a transmission belt having excellent electrical conductivity, ability to maintain electrical conductivity even after driving, flex fatigue resistance, and abrasion resistance. Those furnace carbon blacks may be used solely or in combination of two or more kinds thereof.

Examples of commercially available products of the furnace carbon black include Diablack H (trade name, HAF, produced by Mitsubushi Chemical Corporation), and Diablack I (trade name, ISAF, produced by Mitsubushi Chemical Corporation).

The furnace carbon black is contained in the rubber composition for a transmission belt in an amount of 50 to 100 parts by mass relative to 100 parts by mass of the rubber. A furnace carbon black content of less than 50 parts by mass may not sufficiently provide a desired electrical conductivity and ability to maintain electrical conductivity even after driving. A furnace carbon black content of more than 100 parts by mass may deteriorate the flex fatigue resistance of the belt.

The rubber composition for a transmission belt contains a rubber. By blending the rubber with the furnace carbon black, zinc oxide, and stearic acid each in a specific amount, it is possible to produce a transmission belt having excellent electrical conductivity, ability to maintain electrical conductivity even after driving, flex fatigue resistance, and abrasion resistance.

When ethylene-α-olefin elastomer is blended with the furnace carbon black, zinc oxide, and stearic acid
each in a specific amount, it is possible to produce a transmission belt having more favorable electrical conductivity, ability to maintain electrical conductivity even after driving, flex fatigue resistance, and abrasion resistance. In addition, ethylene-α-olefin elastomer is environmentally preferable.

Examples of the ethylene-α-olefin elastomer include: a rubber consisting of a copolymer of an α-olefin except ethylene, ethylene, and diene (nonconjugated diene) ; a rubber consisting of a copolymer of an α-olefin except ethylene and ethylene; substitution products of those rubbers partially substituted by halogen; or a mixture of two or more kinds thereof. Preferable examples of the α-olefin except ethylene include at least one kind selected from the group consisting of propylene, butene, hexene, and octene. An ethylene-propylene-diene rubber (hereinafter also referred to as EPDM), an ethylene-propylene copolymer (EPM), an ethylene-butene copolymer (EBM), an ethylene-octene copolymer (EOM), a halogen-substituted product thereof (especially a chlorine-substituted product), and a mixture of two or more kinds thereof are preferably used as the ethylene-α-olefin elastomer. It is more preferable to use EPDM because EPDM is inexpensive and is widely used.

In the ethylene-α-olefin elastomer, the ethylene content is preferably 50 to 70% by mass in 100% by mass of the total of the ethylene, α-olefin, and diene, which constitute the ethylene-α-olefin elastomer. This arrangement makes it possible to produce a transmission belt having excellent electrical conductivity, ability to maintain electrical conductivity even after driving, flex fatigue resistance, and abrasion resistance.

As the diene, generally nonconjugated dienes such as 1,4-hexadiene, dicyclopentadiene, and ethylidenenorbornene are suitably employed. These dienes may be used solely or in combination of two or more kinds thereof.

Examples of commercially available products of the ethylene-α-olefin elastomer include Esprene 301 (trade name, produced by Sumitomo Chemical Co., Ltd.), X-3012P, 3085 (trade name, produced by Mitsui Chemicals. Inc.), EP21, EP65 (trade name, produced by JSR Corporation), and 5754, 582F (trade name, produced by Sumitomo Chemicals Co., Ltd).

In the rubber composition for a transmission belt, the particular components, i.e. zinc oxide and stearic acid are further blended each in a specific amount in the composition in which the rubber and the particular furnace carbon black are blended.

Normally, when a furnace carbon black having a large nitrogen adsorption specific surface area value (not less than 75 m²/g) and a large DBP oil absorption value (not less than 100 cm³/100g) is used in a transmission belt, the resulting belt significantly deteriorates while driving. Therefore, when the furnace carbon black of this kind is used, the belt to be obtained has low flex fatigue resistance and low abrasion resistance, and further, the electrical conductivity of the belt deteriorates upon driving.

Compared to the above normal case, when both of the particular components (zinc oxide and stearic acid) are added each in a specific amount to the rubber composition containing the particular furnace carbon black, it is possible to impart excellent flex fatigue resistance and abrasion properties to the belt and is further possible to maintain the electrical conductivity even after driving. Blending zinc oxide and stearic acid in a rubber composition is a known technique per se. However, it is not at all known that addition of both the aforementioned particular components each in a specific amount in the rubber composition which contains the particular furnace carbon black brings about the aforementioned excellent effects. Thus apparently, the unexpectedly excellent effects are obtainable by the present invention.

The rubber composition for a transmission belt contains not less than 6 parts by mass of zinc oxide and not less than 1 part by mass of stearic acid relative to 100 parts by mass of the rubber. By blending zinc oxide and stearic acid each in a specific amount in the rubber composition in addition to the particular furnace carbon black and the rubber, it is possible to produce a transmission belt which has excellent electrical conductivity even after driving the belt and excellent flex fatigue resistance.

A high zinc oxide content may deteriorate the dispersibility in mixing and kneading process and a transmission belt with desired effects may not be obtained. Therefore, the zinc oxide content is preferably 6 to 50 parts by mass and is more preferably 6 to 20 parts by mass. A high stearic acid content may deteriorate the dispersibility in mixing and kneading process and a transmission belt with desired effects may not be obtained. Therefore, the stearic acid content is preferably 1 to 5 parts by mass and is more preferably 1 to 2 parts by mass.

In addition to the aforementioned components, the rubber composition for a transmission belt preferably contains a process oil in an amount of not more than 35 parts by mass relative to 100 parts by mass of the rubber. When a process oil is blended with the rubber composition for a transmission belt, processability for production of the transmission belt can be improved. However, in a case where a backside rubber layer of the belt is produced by using the rubber composition containing the process oil, for example, when a pulley comes into contact with the backside of the belt, abrasion of the backside rubber layer occurs in the backside of the belt. This may produce a peeling sound when the belt is moved away from the flat pulley or produce a sound of the belt tapping on the pulley when the belt comes into contact with the pulley.

The rubber composition for a transmission belt of the present invention can improve the processability and can prevent the foregoing problems from occurring even when the amount of the added process oil is small. More than 35 parts by mass of the blending amount of the process oil may reduce the processability or deteriorate adhesion resistance or abrasion resistance. The blending amount is more preferably 5 to 25 parts by mass.

The process oil is not particularly limited as long as it can be generally used for rubbers. Examples of the process oil include paraffin type process oils, naphthene type process oils, and aromatic process oils. A paraffin type process oil is preferably used among them as it is possible to produce a transmission belt having excellent sound property, flex fatigue resistance, and abrasion resistance. Moreover, a paraffin type process oil is preferable as it is well mixed with ethylene-α-olefin elastomer.

The rubber composition for a transmission belt can be cross-linked with sulfur or an organic peroxide.

The organic peroxide is not particularly limited, and examples thereof include: dialkyl peroxides such as di-t-butyl peroxide, di-t-amyl peroxide, t-butylcumyl peroxide, di-cumyl peroxide, 1,4-di-t-butylperoxy isopropylbenzene, 1,3-di-t-butylperoxy isopropylbenzene, 2,2-di-t-butylperoxybutane,
2,5-dimethyl-2,5-di-(t-butylperoxy)hexane,
2,5-dimethyl-2,5-di-(t-butylperoxy)hexine-3, n-butyl-4,4-di-t-butyl valerate, 1,1-di-t-butylperoxy cyclohexane, di-t-butylperoxy-3,3,5-trimethyl cyclohexane, and 2,2-bis(4,4-di-t-butylperoxy cyclohexyl)propane; peroxy esters such as t-butylperoxy acetate, t-butylperoxy isobutylate, t-butylperoxy pivalate, t-butylperoxy malate, t-butylperoxy neodecanoate, t-butylperoxy benzoate, di-t-butylperoxy phthalate, t-butylperoxy dilaurate, 2,5-dimethyl-2,5-di-(benzoylperoxy)hexane, and t-butylperoxy isopropyl carbonate; ketone peroxides such as dicyclohexanone peroxide; and a mixture thereof. An organic peroxide having one minute half-life temperature of from 130°C to 200°C is more preferable among others, and di-t-butylperoxide, di-t-amyl peroxide, t-butylcumyl peroxide, di-cumylperoxide, and 2,5-dimethyl-2,5-di-(t-butylperoxy)hexane are particularly preferable. Those organic oxides may be used solely, or two or more kinds thereof may be used concomitantly.

The organic peroxide content in the rubber composition for a transmission belt is preferably 0.001 to 0.1 moles relative to 100 parts by mass (solid content) of the rubber. When the content is less than 0.001 moles, the cross-linking may not sufficiently proceed so that mechanical strength may not be provided. When the content is more than 0.1 moles, the scorch safety of the vulcanized product or the stretch of the vulcanized product may deviate from the practical range. The more preferable organic peroxide content is 0. 005 to 0.05 moles.

In the case of the aforementioned crosslinking with peroxide, a co-crosslinking agent may be added. Blending of the co-crosslinking agent makes it possible to increase the crosslinking degree to further stabilize the bonding force and to prevent problems such as adhesive wear and the like. Examples of the co-crosslinking agent include substances usually used for crosslinking with peroxide such as tryallyl isocyanurate (TAIC), tryallyl cyanurate (TAC), 1,2-polybutadiene, and metal salts of unsaturated carboxylic acid, oximes, guanidine, trimethylolpropane trimethacrylate, ethyleneglycol dimethacrylate, N,N'-m-phenylenebismaleimide and sulfur.

In the case of sulfur vulcanization, an amount of sulfur to be added is preferably 1 to 3 parts by mass relative to 100 parts by mass of the rubber.

Moreover, in the case of sulfur vulcanization, a vulcanization accelerator may be added. By blending the vulcanization accelerator to increase a degree of vulcanization, it is possible to prevent a problem such as adhesive wear. The aforementioned vulcanization accelerator may be any kinds as long as it is generally used as a vulcanization accelerator, and examples thereof include N-oxydiethylene benzothiazole-2-sulfenamide (OBS), tetramethylthiuram disulfide (TMTD), tetraethylthiuram disulfide (TETD), zinc dimethyldithiocarbamate (ZnMDC), zinc diethyldithiocarbamate (ZnEDC), N-cyclohexylbenzothiazole-2-sulfenamide, 2-mercaptobenzothiazole, and dibenzothiazolyl disulfide.

The rubber composition for a transmission belt may contain short fiber. The short fiber is not particularly limited, and examples thereof include nylon 6, nylon 66, polyester, cotton, and aramid fiber. Proper selection of the short fiber can improve properties of the rubber composition such as abrasion resistance, abnormal noise prevention effect, and flex fatigue resistance. Proper adjustment of the length, shape, or the like of the short fiber can improve the performances of the rubber composition such as abrasion resistance and abnormal noise prevention effect. Normally, the length of the short fiber is preferably from 0.1 to 3.0 mm.

The rubber composition for a transmission belt may contain various kinds of agents that are normally used in the rubber industry, such as a reinforcing agent including silica; a filler including calcium carbonate and tarc, a plasticizer, a stabilizer, a processing agent, and a coloring agent, if necessary, in addition to the foregoing components.

The rubber composition for a transmission belt can be produced by uniformly mixing the ethylene-α-olefin elastomer, furnace carbon black, zinc oxide, stearic acid, and optionally the foregoing components with a normal mixer such as a roller mixer and a banbury mixer.

The transmission belt of the present invention can be obtained by using the rubber composition for a transmission belt mentioned earlier. Therefore, the transmission belt has excellent electrical conductivity, ability to maintain electrical conductivity even after driving, flex fatigue resistance and abrasion resistance, and thus can be used favorably.

Examples of the transmission belt include a transmission belt in which a part of the rubber elements constituting the belt contains the aforementioned rubber component for a transmission belt. Examples of the aforementioned transmission belt include a V-ribbed belt, a double-ribbed belt, and a flat belt.

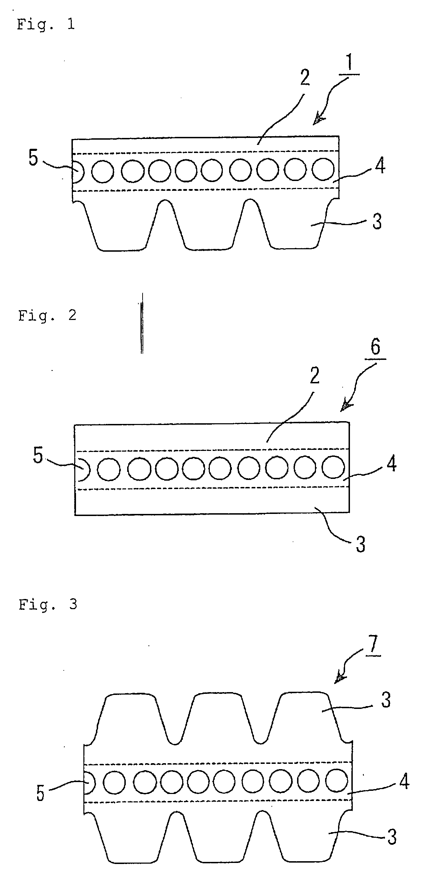

One example of the V-ribbed belt is illustrated in Fig. 1. Fig. 1 shows a schematic view of a transverse cross-section (face perpendicular to the longitudinal direction of the belt) of the V-ribbed belt.

A V-ribbed belt 1 in Fig. 1 is provided with a backside rubber layer 2, a bottom rubber layer 3, and an adhesive rubber layer 4 disposed between the backside rubber layer 2 and the bottom rubber layer 3. Further, core wires 5 are disposed in the longitudinal direction of the belt and fixed by the adhesive layer 4. Moreover, the bottom rubber layer 3 has a plurality of V-section grooves (ribs) continuously formed in the longitudinal direction of the belt. In many cases, short fibers (not shown) are dispersed in the bottom rubber layer 3, with the short fibers aligned in the width direction of the belt, in order to increase the resistance to lateral pressure.

At least a part of the rubber elements constituting the V-ribbedbelt 1 is made of the aforementioned rubber composition for a transmission belt. The rubber elements are the backside rubber layer 2, the bottom rubber layer 3, and the adhesive rubber layer 4. It is preferable that the backside rubber layer 2 or the bottom rubber layer 3 is made of the aforementioned rubber composition for a transmission belt. It is more preferable that both of the backside rubber layer 2 and the bottom rubber layer 3 are formed of the aforementioned rubber composition for a transmission belt. In these cases, the V-ribbed belt 1 has excellent electrical conductivity, ability to maintain electrical conductivity even after driving, flex fatigue resistance, and abrasion resistance. In the case where neither the backside rubber layer 2 nor the bottom rubber layer 3 is formed of the rubber composition for a transmission belt, those rubber layers may be obtained by using the aforementioned rubber and optionally a composition containing another known component.

The adhesive rubber layer 4 may be formed of a conventionally known composition, such as a rubber composition containing the aforementioned rubber. Preferable examples of the rubber composition to provide the adhesive rubber layer 4 include those which contain ethylene-α-olefin elastomer as the rubber. When this kind of rubber composition is used, the effects of the present invention can be obtained. Examples of the rubber composition may further include a rubber composition containing another known component.

Preferable examples of the core wires 5 include polyester core wires, nylon core wires, vinylon core wires, and aramid core wires. As the polyester core wires, polyethylene terephthalate, polyethylene naphthalate and the like are suitably used. As the nylon core wires, 6,6-nylon (polyhexamethyleneadipamide), 6-nylon, and 4,6-nylon are suitably used. As the aramid core wires, copolyparaphenylene-3,4'-oxydiphenylene-terephthalamide, polyparaphenylene terephthalamide, polymethaphenylene isophthalamide and the like are suitably used. The foregoing core wires are generally bonded with a resorcin-formalin-latex adhesive composition (RFL adhesive) or the like, and are embedded in the adhesive rubber layer 4.

Examples of the V-ribbed belt may also include a V-ribbed belt having no adhesive rubber layer.

One example of the flat belt is illustrated in Fig. 2. Fig. 2 shows a schematic view of a transverse cross-section (face perpendicular to the longitudinal direction of the belt) of the flat belt.

A flat belt 6 in Fig. 2 is provided with the backside rubber layer 2, the bottom rubber layer 3, and an adhesive rubber layer 4 disposed between the backside rubber layer 2 and the bottom rubber layer 3. Further, the core wires 5 are disposed in the longitudinal direction of the belt and fixed by the adhesive layer 4. In many cases, short fibers (not shown) are dispersed in the bottom rubber layer 3, with the short fibers aligned in the width direction of the belt, in order to increase the resistance to lateral pressure.

The flat belt 6 can be obtained when at least a part of the rubber elements constituting the belt is made of the aforementioned rubber composition for a transmission belt. As the backside rubber layer 2, the bottom rubber layer 3, the adhesive rubber layer 4, and the core wires 5, it is possible to use elements which are respectively the same with those used for the V-ribbed belt 1. Moreover, as in the case of the V-ribbed belt 1, a preferable embodiment of the flat belt 6 has the backside rubber layer 2 or/and the bottom rubber layer 3 made of the aforementioned rubber composition for a transmission belt. In this case, the flat belt 6 has excellent electrical conductivity, ability to maintain electrical conductivity even after driving, flex fatigue resistance, and abrasion resistance.

One example of the double-ribbed belt is illustrated in Fig. 3. Fig. 3 shows a schematic view of a transverse cross-section (face perpendicular to the longitudinal direction of the belt) of the double-ribbed belt.

A double-ribbed belt 7 in Fig. 3 is provided with the bottom rubber layers 3, and the adhesive rubber layer 4 disposed between the bottom rubber layers 3. Further, the core wires 5 are disposed in the longitudinal direction of the belt and fixed by the adhesive layer 4. Moreover, each bottom rubber layer 3 has a plurality of V-section grooves (ribs) continuously formed in the longitudinal direction of the belt. In many cases, short fibers (not shown) are dispersed in the bottom rubber layers 3, with the short fibers aligned in the width direction of the belt, in order to increase the resistance to lateral pressure.

The double-ribbed belt 7 can be obtained when at least a part of the rubber elements constituting the belt is made of the aforementioned rubber composition for a transmission belt. As the bottom rubber layers 3, the adhesive rubber layer 4, and the core wires 5, it is possible to use elements which are respectively the same with those used in the V-ribbed belt 1. Moreover, as in the case of the V-ribbed belt 1, a preferable embodiment of the double-ribbed belt 7 has the bottom rubber layers 3 containing the aforementioned rubber composition for a transmission belt. In this case, the double-ribbed belt 7 has excellent electrical conductivity, ability to maintain electrical conductivity even after driving, flex fatigue resistance, and abrasion resistance.

Preferable examples of the transmission belt include a transmission belt in which the vulcanized rubber constituting the transmission belt has s hardness of 75 to 90 when measured with a type-A durometer according to JIS K6253. The vulcanized rubber constituting the transmission belt with the foregoing hardness will provide the transmission belt which is excellent in all the properties including electrical conductivity, ability to maintain electrical conductivity even after driving, flex fatigue resistance, and abrasion resistance. The more preferable hardness is 80 to 90.

The transmission belt having the vulcanized rubber properties with the foregoing hardness can be obtained by appropriately selecting the foregoing components to be contained in the rubber composition for a transmission belt.

The transmission belt of the present invention has an electrical resistance of not more than 1 MΩ when measured in a form of a 6-rib PK V-ribbed belt, and can be obtained by using a vulcanized rubber produced from a rubber composition for a transmission belt, wherein the vulcanized rubber, which constitutes the transmission belt, contains 25 to 40% by mass of a carbon black as measured under a condition in accordance with the method A of JIS K6227; and the rubber composition contains a rubber, zinc oxide in an amount of not less than 6 parts by mass relative to 100 parts by mass of the rubber, and stearic acid in an amount of not less than 1 part by mass relative to 100 parts by mass of the rubber. The transmission belt has excellent electrical conductivity, ability to maintain electrical conductivity even after driving, flex fatigue resistance, and abrasion resistance.

When the transmission belt in a form of a 6-rib PK V-ribbed belt has an electrical resistance of not more than 1 MΩ, the transmission belt can have excellent electrical conductivity. The electrical resistance is a value measured according to the method in the later described "Electrical resistance of driving of belt."

The carbon black to be used in the transmission belt is not particularly limited, and the aforementioned specific furnace carbon black is especially preferable. Use of the furnace carbon black can favorably provide the transmission belt achieving the aforementioned effects.

According to the transmission belt of the present invention, when the carbon black content in the vulcanized rubber, which constitutes the transmission belt, is within a range of 25 to 40% by mass, the vulcanized rubber which has excellent electrical conductivity even after driving the belt and excellent flex fatigue resistance can be obtained. Moreover, by blending the zinc oxide and the stearic acid each in a specific amount, it is possible to produce the transmission belt which has excellent flex fatigue resistance as well as excellent electrical conductivity even after driving the belt.

In the transmission belt of the present invention, the vulcanized rubber, which constitutes the transmission belt, preferably has a hardness of 75 to 90 when measured with a type-A durometer according to JIS K6253. The vulcanized rubber with the foregoing hardness will provide the transmission belt which is excellent in all the properties including electrical conductivity, ability to maintain electrical conductivity even after driving, flex fatigue resistance, and abrasion resistance. The more preferable hardness is 80 to 90. The transmission belt with the foregoing hardness can be obtained by appropriately selecting the foregoing components to be contained in the rubber composition for a transmission belt.

The transmission belt of the present invention can be produced by a generally known method. For example, the V-ribbed belt can be produced according to a production method including: mixing and kneading a composition containing components such as a rubber using a closed kneader; pressing and extending the thus obtained rubber composition with an open roll to prepare an unvulcanized sheet to serve as a bottom rubber layer and a backside rubber layer; laminating the bottom rubber layer and an adhesive layer embedded with core wires such as polyester core wires; and bonding the backside rubber layer to the adhesive rubber layer.

### EFFECTS OF THE INVENTION

As the rubber composition for a transmission belt of the present invention has the aforementioned structure, it is possible to produce a transmission belt which is excellent in all the properties including electrical conductivity, ability to maintain electrical conductivity even after driving, flex fatigue resistance, and abrasion resistance. Namely, the transmission belt can be provided with a desired electrical conductivity and ability to maintain electrical conductivity even after driving the belt. Further, the transmission belt can be provided with better flex fatigue resistance and abrasion resistance as compared with a transmission belt not imparted with electrical conductivity.

Therefore, the rubber composition for a transmission belt of the present invention makes it possible to provide a transmission belt which is favorably used as a V-ribbed belt, a double-ribbed belt, a flat belt, and other types of belts. Moreover, the rubber composition for a transmission belt of the present invention is expected to be applicable to belts for other uses requiring electrical conductivity.

### BEST MODE FOR CARRYING OUT THE INVENTION

The following description will discuss the present invention in more details by referring to Examples; however, the present invention is not limited to those Examples. It is to be noted that "parts" and "%" in Examples mean "parts by mass" and "% by mass", respectively, unless otherwise stated.

### Examples 1 to 19 and Comparative Examples 1 to 13

Table 1 shows proportions of rubber compositions used for forming the bottom rubber layers and backside rubber layers of the transmission belts. Table 2 shows formulations of the commercially available products. Table 3 shows formulations of rubber compositions used for forming the adhesive rubber layers.

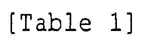

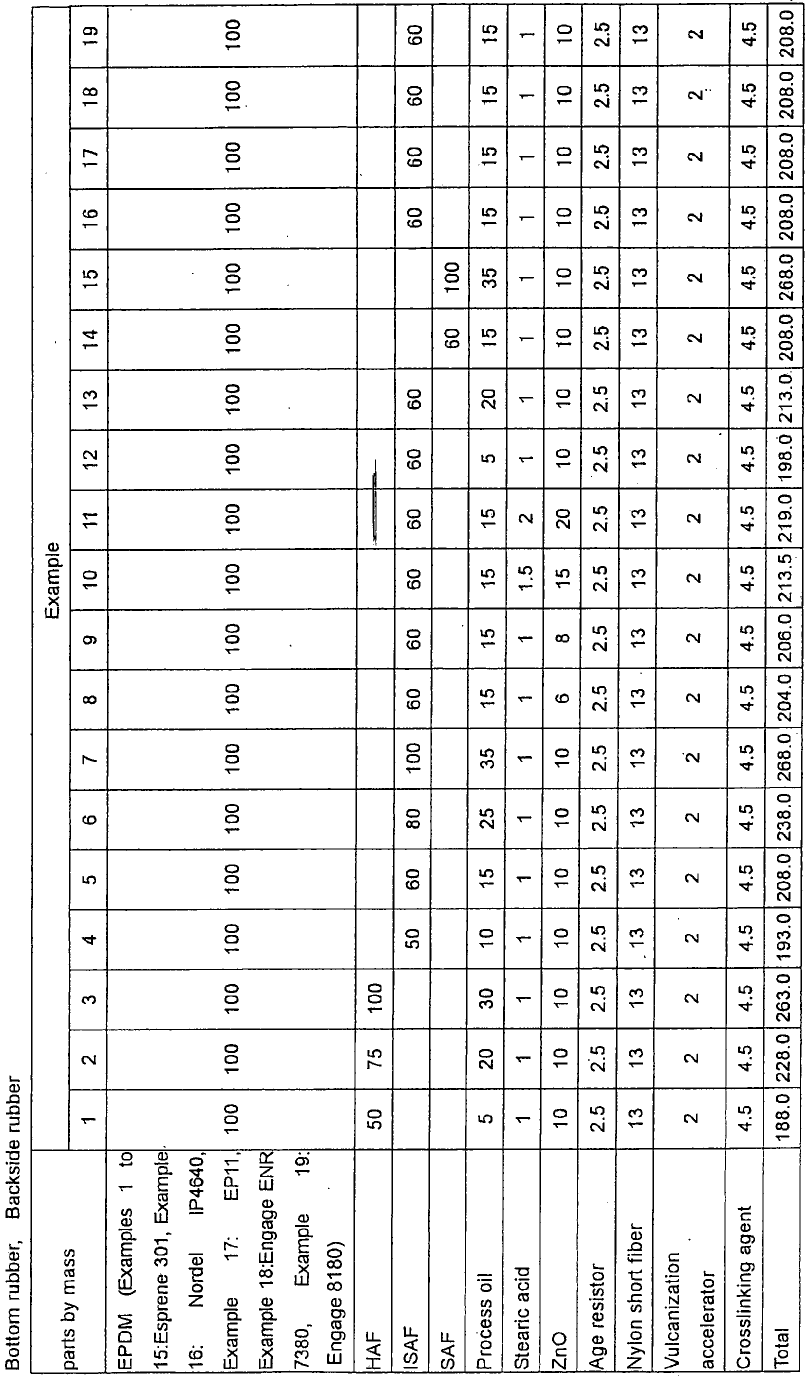

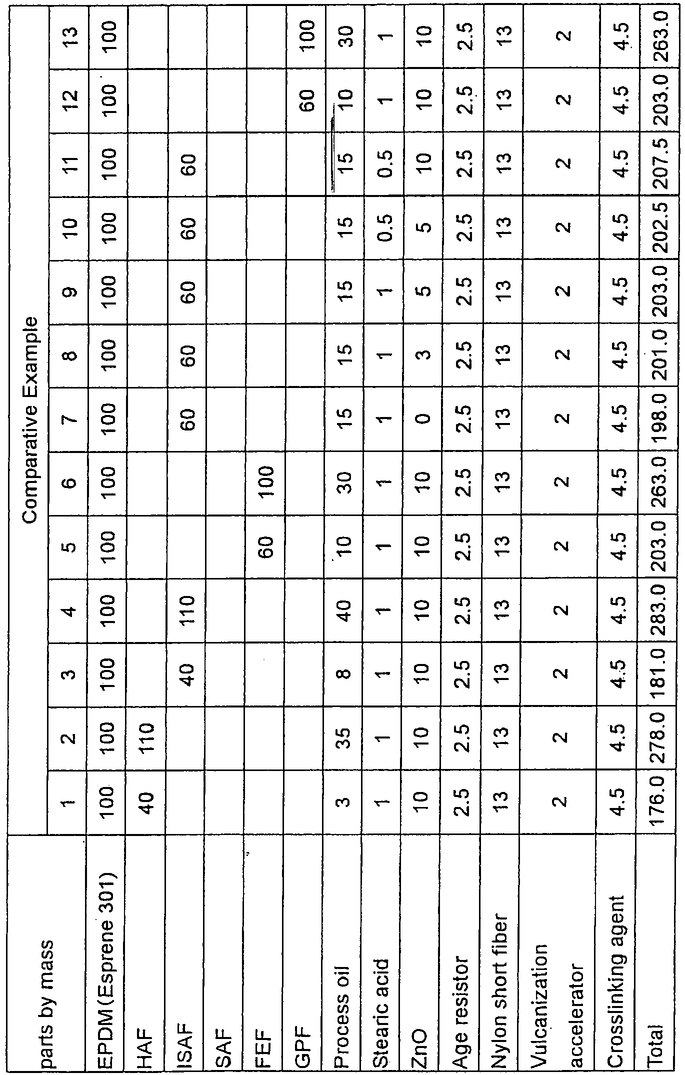

**[Table 2]**

| Blended chemicals | |
|---|---|
| EPDM | Esprene 301 (Sumitomo Chemical Co., Ltd.): Mooney viscosity ML1+4(125°C)37, Ethylene content 63%, propylene content 34%, DCPD content 3% |
| | Nordel IP4640(Dow Chemical): Mooney viscosity ML1+4(125°C)40, Ethylene content 55%, propylene content 40%, ENB content 4.9% |
| | EP11(JSR): Mooney viscosity ML1+4(100°C)40, Ethylene content 51%, propylene content 49%, diene content none |
| | EngageENR7380(Dow Chemical): Mooney viscosity ML1+4(121°C)48, Total Crystallinity 16% |
| | Engage8180(Dow Chemical): Mooney viscosity ML1+4(121°C)35, Total Crystallinity 16% |
| Furnace carbon black | HAF(Mitsubishi Chemical Corporation, DIABLACK H, Nitrogen adsorption specific area 79m²/g, DBP oil absorption 105cm³/100g, Average primary particle diameter 31 nm) |
| | ISAF(Mitsubishi Chemical Corporation, DIABLACK I, Nitrogen adsorption specific area 114m²/g, DBP oil absorption 114cm³/100g Average primary particle diameter 23 nm) |
| | FEF(Tokai Carbon Co., Ltd, SEAST SO, Nitrogen adsorption specific area 42m²/g, DBP oil absorption 121cm³/100g, Average primary particle diameter 43 nm) |
| | SAF(Mitsubishi Chemical Corporation, DIABLACKA, Nitrogen adsorption specific area 142m²/g, DBP oil absorption 116cm³/100g Average primary particle diameter 19 nm) |
| | GPF (Mitsubishi Chemical Corporation, DIABLACK G, Nitrogen adsorption specific area 28m²/g, DBP oil absorption 84cm³/100g, Average primary particle diameter 80 nm) |
| Process oil | Paraffin oil (Japan Sun Oil Company Ltd.) |
| Age resistor | NOCRAC 224(Ouchi Shinko Chemical Industrial Co., Ltd.) |
| | NOCRAC MB(Ouchi Shinko Chemical Industrial Co., Ltd.) |

**[Table 3]**

| Adhesive rubber | | |
|---|---|---|
| | | Examples and Comparative Examples |
| EPDM (ESPRENE 301) | | 100 |
| Furnace carbon black(FEF) | | 60 |
| Process oil | | 10 |
| Stearic acid | | 1 |
| Zinc oxide | | 5 |
| Age resistor | | 2.5 |
| Vulcanization accelerator | | 25 |
| Crosslinking agent | | 4.5 |
| Total (parts by weight) | | 185 |

The materials used are the same commercial products as those in Table 2.

The commercially available ethylene-α-olefin elastomers used were as follows.
(1) Esprene 301: ethylene content 63% by mass; propylene content 34% by mass; dicyclopentadiene (DCPD) content 3% by mass; Mooney viscosity ML₁₊₄ (125 °C) 37
(2) Nordel 4640: ethylene content 55% by mass; propylene content 40% by mass; ethylidenenorbornene (ENB) content 4.9% by mass; Mooney viscosity ML₁₊₄ (125 °C) 40
(3) EP11: ethylene content 51% by mass; propylene content 49% by mass; diene content 0% by mass; Mooney viscosity ML₁₊₄ (100 °C) 40
(4) Engage ENR 7380: EBM
(5) Engage 8180: EOM

The compounding ratio of age resistors NOCRAC 224 and NOCRAC MB is 0.5:2.0 (phr).

### (Production of transmission belt)

The rubber compositions for forming the bottom rubber layers and the backside rubber layers were mixed and kneaded by a closed kneader. The resulting rubber compositions were pressed and extended by an open roll to prepare unvulcanized sheets. The unvulcanized sheets were used as the bottom rubber layers and the backside rubber layers. In a similar manner, using the rubber composition for forming the adhesive rubber layer, unvulcanized sheets were prepared and used as the adhesive rubber layers. After lamination of the adhesive rubber layer embedded with polyester core wires or the bottom rubber layer, the backside rubber layer was bonded to the adhesive rubber layer so that a V-ribbed belt (6-rib PK) was obtained.

Table 4 shows the carbon black contents (value measured according to method A, JIS K6227) in the vulcanized rubber each constituting the thus obtained V-ribbed belt.

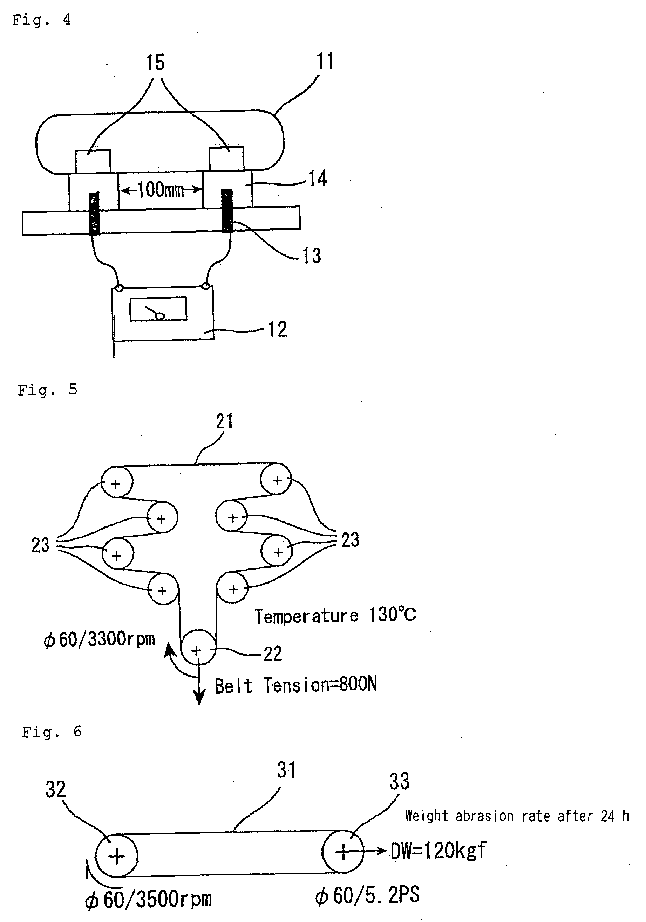

The thus obtained V-ribbed belts were bench-tested to examine the electrical resistance, flex-resistant duration in driving, and abrasion amount after driving the belt for 24 hours. Table 4 shows the results. The method for measuring the electrical resistance was as follows: a belt was set on a brass base with the measuring surface facing down; a 1kg weight was placed on the belt; a terminal of an electrical resistance meter was attached to the brass base and a voltage of 500 V was applied; and the electrical resistance was measured. (Fig. 4 illustrates a schematic view of the electrical resistance measurement.)

The electrical resistance was measured using an electrical resistance meter "3154 Insulation Tester" (produced by Hioki E.E. Corporation) under conditions of test voltage: 500V and data readout time: five seconds after the start.

### (Electrical resistance after driving of belt)

The belt was arranged in a nine-shaft layout as shown in Fig. 5. The electrical resistance of the belt before driving and the electrical resistance after driving for 100 hours were measured. The measurable range of the electrical resistance was from 0.01 MΩ to 1000 MΩ.

### (Flex driving-resistant test)

The belt was arranged in a nine-shaft layout as shown in Fig. 5, and the time period from start of driving the belt to generation of a crack was evaluated. The data shown in Fig. 4 were the resulting time periods before occurrence of a crack expressed in relative values to the result of Comparative Example 1 taken as 100.

### (Abrasion resistance test)

The belt was arranged in a two-shaft layout as shown in Fig. 6, and the difference in weight of the belt before driving and after driving for 24 hours was obtained to evaluate the weight abrasion rate. The data shown in Fig. 4 were the resulting weight abrasion rates converted to index numbers relative to the result of Comparative Example 1 taken as 100.

Further, evaluation was performed on whether or not there was stickiness. Presence of a sticky matter on the belt after the abrasion resistance test was determined by eye observation.

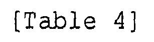

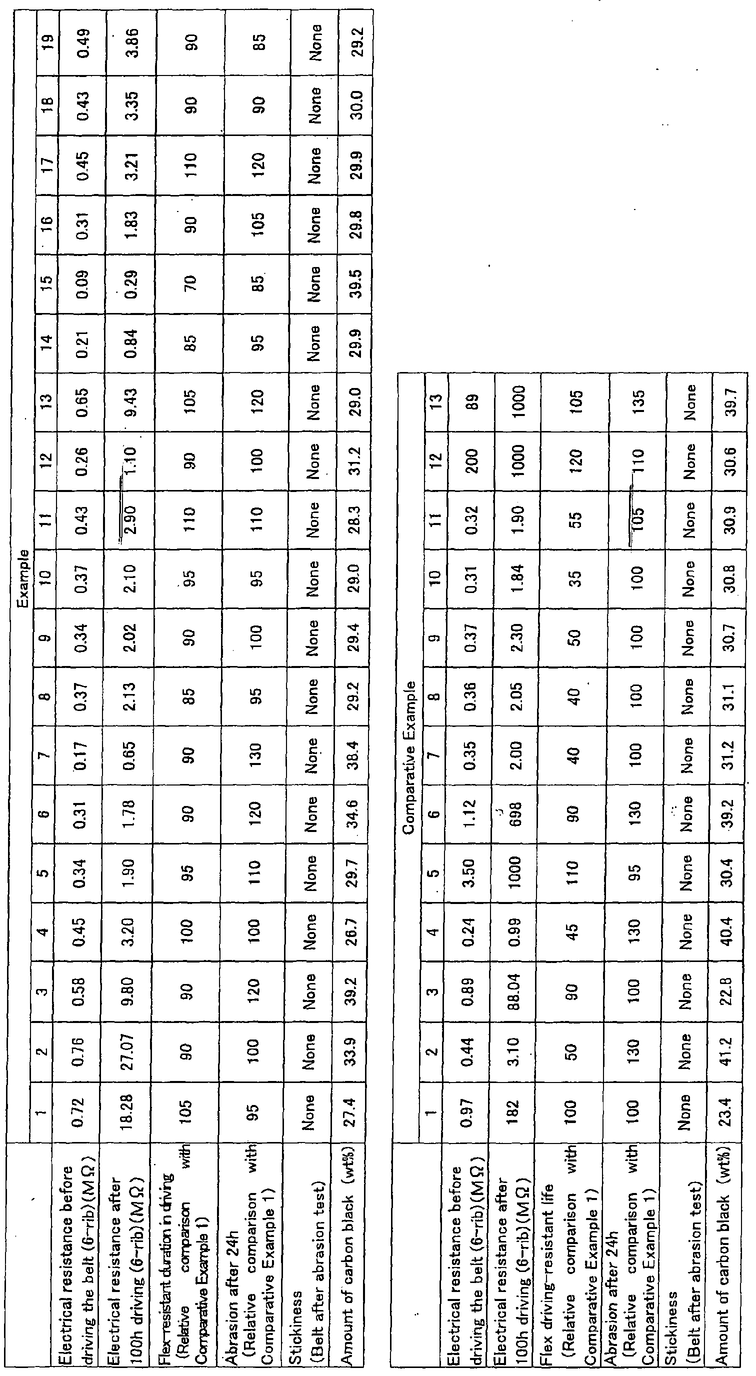

In Comparative Examples 1 and 3, since the amount of the furnace carbon black is less than the specific range, the electrical resistance after driving the belt for 100 hours was not the desired value of 50 MΩ or less. In Comparative Examples 2 and 4, since the amount of the carbon black is more than the specific range, the belts had poor flex driving-resistant life. In Comparative Examples 5 and 6, since the initial electrical resistance was 1 MΩ or more and the nitrogen adsorption specific surface area of the carbon black used was less than the specific range, the belts had high electrical resistance after driving the belts for 100 hours. In Comparative Examples 7 to 9, since the amount of the zinc oxide was less than the specific range, the belts had poor flex fatigue resistance. In Comparative Examples 10 to 11, since the amount of the stearic acid was less than the specific range, the belts had poor flex fatigue resistance. In Comparative Examples 12 to 13, since the nitrogen adsorption specific area and the DBP oil absorption of the carbon black used were less than the specific range, the initial electrical resistance and the electrical resistance after driving the belts for 100 hours were high. As mentioned earlier, in Comparative Examples, no belt was obtained which was excellent in all the properties. In contrast to the results of Comparative Examples, in Examples, the flex fatigue resistance and the abrasion resistance of the belts were on par with Comparative Examples, while the electrical resistance was significantly improved.

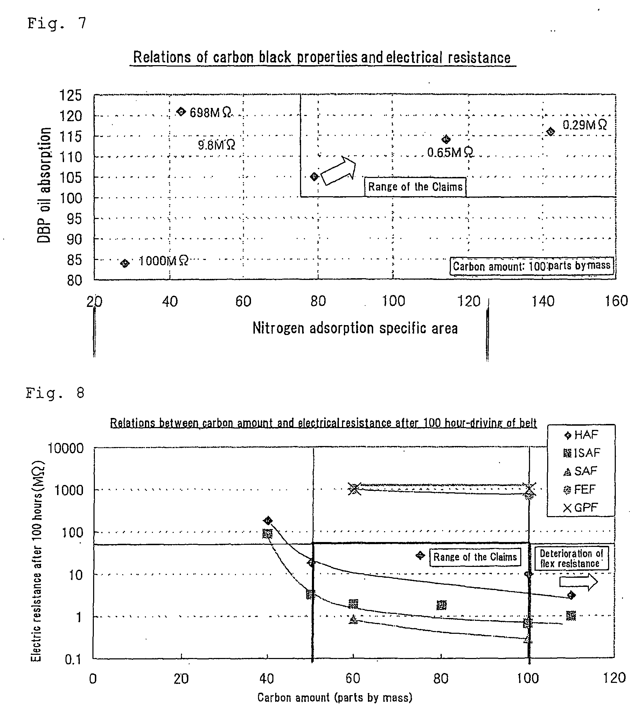

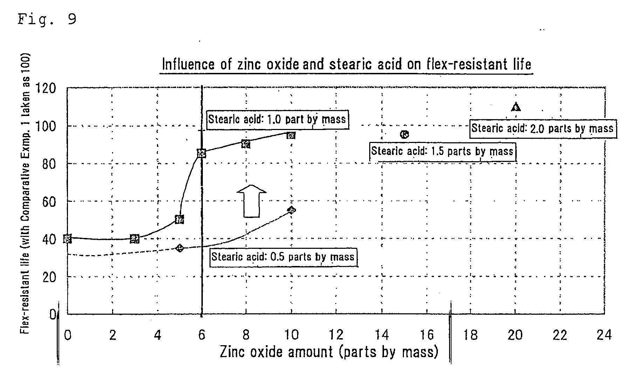

Fig. 7 shows relations of the nitrogen adsorption specific area and the DBP oil absorption area that are properties of the carbons blended in Examples 3, 7 and 15, and Comparative Examples 6 and 13. It is clearly indicated that use of the carbon having the values prescribed in the present invention makes it possible to satisfy the electrical resistance. Fig. 8 shows relations of the amount of the carbon and the electrical resistance after driving for 100 hours (Examples 1 to 3 and Comparative Examples 1 to 2 (HAF), Examples 4 to 7 and Comparative Examples 3 to 4 (ISAF), Examples 14 to 15 (SAF), Comparative Examples 5 to 6 (FEF) and, Comparative Examples 12 to 13 (GPF)). As clearly shown by the figure, the FEF and GPF, both having the values out of the stipulated range of the present invention, have a high electrical resistance. When the amount of the carbon is less than the amount stipulated in the present invention, the electrical resistance exceeds the desired 50 MΩ. On the other hand, the carbon amount of more than the amount stipulated in the present invention may improve the electrical resistance but deteriorate the flex-resistant life. Fig. 9 is a graph showing relations of the amounts of zinc oxide and stearic acid with the flex-resistant life (Examples 5, 8 and 9, and Comparative Examples 7 to 9 (stearic acid 1.0 part by mass), Comparative Examples 10 to 11 (stearic acid 0.5 parts by mass), Example 10 (stearic acid 1.5 parts by mass), Example 11 (stearic acid 2 parts by mass)). In the case where the amount of the stearic acid is 1 part by mass, addition of more than 6 parts by mass of the zinc oxide significantly improves the flex-resistant life. In the case where the amount of the stearic acid is 0.5 parts by mass, addition of more than 6 parts by mass of the zinc oxide does not improve the flex-resistant life.

Accordingly, it is revealed that production of a belt using a carbon having the specific amounts of nitrogen adsorption and DBP oil absorption according to the present invention, and a rubber composition containing the specific amounts of zinc oxide and stearic acid can provide a belt which satisfies the basic performances and has a desired electrical resistance of not more than 50 MΩ.

### INDUSTRIAL APPLICABILITY

The rubber composition for a transmission belt of the present invention can be employed for production of a transmission belt which is suitably used as a V-ribbed belt, a double-ribbed belt, a flat belt, and other types of belts. Furthermore, the rubber composition for a transmission belt of the present invention should be applicable to belts for other uses requiring electrical conductivity.

### BRIEF DESCRIPTION OF THE DRAWINGS

Fig. 1 shows one example of a transverse cross-sectional view (face perpendicular to the longitudinal direction of the belt) of a V-ribbed belt.
Fig. 2 shows one example of a transverse cross-sectional view of a flat belt.
Fig. 3 shows one example of a transverse cross-sectional view of a double-ribbed belt.
Fig. 4 shows a schematic view illustrating electrical resistance measurement.
Fig. 5 shows a schematic view illustrating a driving test device used for testing change in electrical resistance caused by belt driving and testing flex-driving resistance.
Fig. 6 shows a schematic view illustrating an apparatus for abrasion test.
Fig. 7 is a graph showing relations of the properties (nitrogen adsorption surface area, DBP oil absorption) of a carbon black and the electrical resistance after 100-hour driving.
Fig. 8 is a graph showing relations between the carbon amount and the electrical resistance after 100-hour driving.
Fig. 9 is a graph showing relations of the amounts of zinc oxide and stearic acid and the flex-resistant life.

### EXPLANATION OF SYMBOLS

- 1, 11, 21, 31: V-ribbed belt
- 2: Backside rubber layer
- 3: Bottom rubber layer
- 4: Adhesive rubber layer
- 5: Core wire
- 6: Flat belt
- 7: Double-ribbed belt
- 12: Electrical resistance meter
- 13: Terminal (Measuring section)
- 14: Brass vase
- 15: Weight (1 kg)
- 22, 23: Driving pulley
- 23, 33: Driven Pulley

## Claims

1. A rubber composition for a transmission belt, wherein said rubber composition contains:
100 parts by mass rubber, and
- referring to said 100 parts by mass rubber-
50 to 100 parts by mass furnace carbon black,
not less than 6 parts by mass zinc oxide, and
not less than 1 part by mass stearic acid,
wherein,
said rubber is an ethylene-α-olefin elastomer; and
said furnace carbon black has
- a nitrogen adsorption specific surface area of not less than 75 m²/g, and
- a DBP oil absorption of not less than 100 cm³/100 g.

2. The rubber composition according to Claim 1,
wherein,
said ethylene-α-olefin elastomer is selected from a group including the following elements:
- an ethylene-propylene-diene rubber (EPDM),
- an ethylene-propylene copolymer (EPM),
- an ethylene-butene copolymer (EBM),
- an ethylene-octene copolymer (EOM), and
- halogen substituted, especially chlorine substituted products thereof.

3. A transmission belt having rubber elements such as a backside rubber layer (2), a bottom rubber layer (3) or an adhesive rubber layer (4),
wherein,
at least one rubber element of said rubber elements has been made from the rubber composition according to Claim 1 or 2.

4. The transmission belt according to Claim 3,
wherein,
at least one rubber element of said rubber elements has been made by crosslinking the rubber composition according to Claim 1 or 2 by means of sulphur or by means of an organic peroxide.

5. The transmission belt according to Claim 4,
wherein,
the vulcanised rubber constituting said rubber element
- contains 25 to 40 % by mass furnace carbon black as measured in accordance of method A of Japanese Industrial Standard (JIS) K6227; and
- comprises an electrical resistance of not more than 1 MΩ when measured by applying a test voltage of 500 V along a length of 100 mm of a 6-rib Pk V-ribbed belt.

## Patentansprüche

1. Kautschukzusammensetzung für einen Treibriemen, worin die Kautschukzusammensetzung enthält:
100 Massenteile Kautschuk, und
- bezüglich dieser 100 Massenteile Kautschuk -
50 bis 100 Massenteile Furnace-Ruß,
nicht weniger als 6 Massenteile Zinkoxid, und
nicht weniger als 1 Massenteil Stearinsäure,
wobei
der Kautschuk ein Ethylen-α-Olefin-Elastomer ist, und
der Furnace-Ruß
- eine spezifische Stickstoffadsorptions-Oberfläche von nicht weniger als 75m²/g aufweist, und
- eine DBP-Ölabsorption von nicht weniger als 100 cm³/100g.

2. Kautschukzusammensetzung nach Anspruch 1,
wobei
das Ethylen-α-Olefin-Elastomer gewählt ist aus einer Gruppe, welche die folgenden Elemente umfasst:
- einen Ethylen-Propylen-Dien-Kautschuk (EPDM),
- ein Ethylen-Propylen-Copolymer (EPM),
- ein Ethylen-Buten-Copolymer (EBM),
- ein Ethylen-Octen-Copolymer (EOM), und
- halogensubstituierte Produkte, insbesondere chlorsubstituierte Produkte davon.

3. Treibriemen mit Kautschukelementen, wie beispielsweise einer rückseitigen Kautschukschicht (2), einer unteren Kautschukschicht (3) oder einer Haftgummischicht (4),
wobei
wenigstens ein Kautschukelement dieser Kautschukelemente aus der Kautschukzusammensetzung nach Anspruch 1 oder 2 gebildet wurde.

4. Treibriemen nach Anspruch 3,
wobei
wenigstens ein Kautschukelement dieser Kautschukelemente durch Vernetzung der Kautschukzusammensetzung nach Anspruch 1 oder 2 mittels Schwefel oder mittels eines organischen Peroxids gebildet wurde.

5. Treibriemen nach Anspruch 4,
wobei
der vulkanisierte Kautschuk, der das Kautschukelement bildet,
- 25 bis 40 Massenprozent Furnace-Ruß gemessen nach dem Verfahren A des Japanese Industrial Standard (JIS) K6227 enthält, und
- einen elektrischen Widerstand von nicht mehr als 1 MΩ aufweist, wenn die Messung durch Anlegen einer Prüfspannung von 500 V über eine Länge von 100 mm eines 6-rippigen Pk-Keilrippenriemens erfolgt.

## Revendications

1. Une composition de caoutchouc pour une courroie de transmission, où ladite composition de caoutchouc contient:
100 parties en masse de caoutchouc, et
- référant à ces 100 parties en masse de caoutchouc -
50 à 100 parties en masse de noir de carbone au four,
au moins 6 parties en masse d'oxyde de zinc, et
au moins 1 partie en masse d'acide stéarique,
où
ledit caoutchouc est un élastomère d'éthylène-α-oléfine, et
ledit noir de carbone au four a
- une surface spécifique d'adsorption de nitrogène d'au moins 75 m²/g, et
- une absorption d'huile DBP d'au moins 100 cm³/100g.

2. La composition de caoutchouc selon la revendication 1,
où
l'élastomère d'éthylène-α-oléfine est sélecté d'un groupe comprenant les éléments suivants:
- un caoutchouc éthylène-propylène-diène (EPDM),
- un copolymère éthylène-propylène (EPM),
- un copolymère éthylène-butène (EBM),
- un copolymère éthylène-octène (EOM), et
- des produits de ces derniers, substitués par halogène, en particulier substitués par du chlore.

3. Une courroie de transmission ayant des éléments en caoutchouc, comme par exemple une couche d'envers en caoutchouc (2), une couche de fond en caoutchouc (3) ou une couche adhésive en caoutchouc (4),
où
au moins un élément en caoutchouc desdits éléments en caoutchouc a été fabriqué de la composition en caoutchouc selon la revendication 1 ou 2.

4. La courroie de transmission selon la revendication 3,
où
au moins un élément en caoutchouc desdits éléments en caoutchouc a été fabriqué par réticulation de la composition de caoutchouc selon la revendication 1 ou 2 au moyen de soufre ou au moyen d'un peroxyde organique.

5. La courroie de transmission selon la revendication 4,
où
le caoutchouc vulcanisé constituant ledit élément en caoutchouc
- contient 25 à 40 pourcent en masse de noir de carbone au four, mesuré conformément à la méthode A de la Norme Industrielle Japonaise (JIS) K6227, et
- comprend une résistance électrique d'au moins 1 MΩ, mesuré en appliquant une tension d'essaie de 500 V le long d'une longueur de 100 mm d'une courroie Pk à nervures en V avec 6 nervures.
